# EUROPÄISCHE PATENTANMELDUNG

(11) **EP 0 531 569 A1**
(43) Veröffentlichungstag der Anmeldung: **17.03.1993**
(21) Anmeldenummer: 91115429.2
(22) Anmeldetag: 12.09.1991
(51) Int. Cl.: G02B 5/30

(54) **Herstellung lichtpolarisierender Filme**

(71) Anmelder: Agfa-Gevaert AG, D-51373 Leverkusen (DE)
(72) Erfinder: Claussen, Uwe, Dr., W-5090 Leverkusen 3 (DE); Roche, Edouard, Dr., W-5204 Lohmar 1 (DE)

(57) **Zusammenfassung**

Ein Verfahren zur Herstellung eines lichtpolarisierenden Films auf der Basis von Polyvinylalkohol und wenigstens eines organischen, dichroitischen Chromophors durch Auftragen einer Lösung, die sowohl das wenigstens eine Chromophor als auch Polyvinylalkohol enthält, mittels eines dosierenden Gießers auf eine an der Auftragsstelle vorbeigeführte Trägerfolie, Entfernen des Lösungsmittels, Abziehen der Polyvinylalkoholfolie und Becken der Polyvinalalkoholfolie, führt bei großen Gießgeschwindigkeiten zu gleichmäßigen Produkten.

## Beschreibung

Die vorliegende Erfindung betrifft die Herstellung eines lichtpolarisierenden Films, der dichroitische Chromophore enthält.

Filme auf der Basis von Polyvinylalkohol (PVAL), die Jod oder dichroitische Farbstoffe als polarisierende Agentien enthalten, sind bekannt.

Technische Verwendung haben bislang allein die Jod-haltigen Polarisatoren gefunden, die beispielsweise in den passiven Flüssigkristall-Displays zur Sichtbarmachung der Information eingesetzt werden. Bei Abwesenheit von Feuchtigkeit kennzeichnen diese Filme eine ausgezeichnete Lichtechtheit und hervorragende dichroitische Eigenschaften im langwelligen Bereich des sichtbaren Spektrums. Das wirksame Agens dieser Filme ist der Jod-PVA-Komplex (M.M. Zwick, J. Appl. Polym. Sci.; 9 2393-2424 (1965)), der das Tageslicht zwar breitbandig, aber nicht vollständig absorbiert. Im kurzwelligen (orangegelben) Bereich des Spektrums liegt ein Bereich verminderter Extinktion, weswegen die Folien eine blaue Eigenfarbe zeigen.

Die Iod enthaltenden, lichtpolarisierenden Filme werden hergestellt, indem man zunächst den PVAL-Film extrudiert, reckt und anschließend Iod aufziehen läßt. Dies führt zu einer inhomogenen Iodverteilung in der Folie. Im Querschnitt erkennt man, daß die Iodkonzentration zu den Oberflächen des Films hin ansteigt und zum Inneren des Films stark abnimmt, so daß ein Teil des PVAL-Filmvolumens ungenutzt bleibt und der Film dicker als gewünscht ist. Gravierender noch ist es, daß die Chromophorkonzentration zwischen Anfang und Ende eines PVAL-Films ungleichmäßig ist, wenn man eine größere Länge eines PVAL-Films zur Aufnahme des Iods kontinuierlich durch ein Iod enthaltendes Färbebad führt.

Extrudiert man einen bereits Iod enthaltenden PVAL-Film, so ist durch Recken dieses Films die für die Lichtpolarisierung erforderliche Orientierung der Iodmoleküle nicht mehr ausreichend möglich.

Der Iod enthaltende Film hat überdies Nachteile, wenn man weißes Licht nach dem Durchgang durch die Folie erhalten will. Das unpolarisiert durchgelassene Licht vermindert den Dichroismus und damit die Polarisationsleistung in diesem Bereich. Zur Steigerung des Dichroismus ist man gezwungen, die Konzentration an Iod-Komplex zu erhöhen. Diese Korrektur im kurzwelligen Bereich zieht aber eine übermäßige Extinktion im langwelligen Bereich nach sich. Die Folge ist eine deutliche Schwächung des durchgelassenen Lichts in der Durchgangsstellung im Bereich des Absorptionsmaximums. Eine optische Anzeige, die mit dieser Folie bestückt wird, ist in ihrer Helligkeit vermindert. Um zu vertretbaren Helligkeiten zu gelangen, muß man Kompromisse schließen.

Eine wichtige kritische Meßgröße einer universal verwendbaren optischen Anzeige ist die Ablesbarkeit bei verschiedenen Beleuchtungsverhältnissen, sie wird üblicherweise als "Perceived contrast ratio" (PCR) angegeben. Es soll die Transmission einerseits in der Sperrstellung so klein wie möglich (Ablesbarkeit bei Dunkelheit), andererseits in der Durchgangsstellung so groß wie möglich (Ablesbarkeit bei Helligkeit) sein. Dies erfordert eine ganz gleichmäßige, möglichst hohe Polarisationsleistung des Filters über den gesamten Bereich des sichtbaren Spektrums, welche mit der Jodfolie prinzipiell nicht erreicht werden kann.

Es hat nicht an Versuchen gefehlt, Jod durch Mischungen anderer dichroitischer Chromophore zu ersetzen, um ein Neutralgrau mit gleichmäßigen Dichroismus zu erzeugen. Allerdings bedarf es hierzu beispielsweise einer Gamme sehr leistungsfähiger Farbstoffe. Sie müssen neben guten Licht- und Wetterechtheiten eine hohe Extinktion und einen hohen Dichroismus in der Matrix aufweisen.

So sind vorzugsweise Polyazofarbstoffe vorgeschlagen worden (Nippon Kayaku JA 59-145 255, 60-156 759, 60-168 743). Obgleich aber der Dichroismus bei den Farbstoffen eine verbreitete Eigenschaft ist, (vgl. W. Hanle, H. Scherer, Zeitschr. Naturforsch. 6a 437-439 (1951)) gelang es bisher nicht, die spektralen Eigenschaften der Jodfolie zu erreichen oder zu übertreffen. Dies ist dem Fehlen guter Blaunuancen, der Forderung nach dem hohen Dichroismus des Systems Farbstoff/Matrix und der verlangten extremen Farbdichte im absorbierenden Zustand zuzuschreiben. Im Vergleich zu den Farbstoffen hat nämlich das im Komplex gebundene Iod-Molekül eine hohe molare Extinktion, sie beträgt etwa 43 000 (R.R. Baldwin, R.S. Baer, R.E. Rundle, J.Am. Chem.Soc., 66 111 (1944)). Da das Chromophor zweiatomig ist, erreicht man sehr hohe molare Konzentrationen und damit extreme Extinktionen. Farbstoffe, die eine vergleichbare molare Absorption haben, weisen in der Regel deutlich höhere - meist 4-8 fach höhere - Molgewichte auf, weswegen es schwer fällt, mit einem Farbstoff die verlangten Extinktionen zu erhalten. Man ist nämlich gezwungen, sehr hohe Konzentrationen an Farbstoffen einzusetzen. Es hat sich gezeigt, daß es unmöglich ist, dichroitische Farbstoffe in ausreichender Menge auf einen bereits gereckten PVAL-Film aufziehen zu lassen.

Aufgrund der vorstehend beschriebenen Schwierigkeiten ist es bisher nicht gelungen, lichtpolarisierende Filme auf der Basis organischer, dichroitischer Chromophore ohne den Einsatz von Iod als Chromophor mit technisch zureichenden Eigenschaften auf den Markt zu bringen.

Aufgabe der vorliegenden Erfindung war daher, ein Herstellungsverfahren zu finden, das es gestattet, lichtpolarisierende Filme, die wenigstens ein organisches, dichroitisches Chromophor in ausreichender Konzentration enthalten, herzustellen.

Diese Aufgabe wird durch ein spezielles Gießverfahren gelöst.

Gegenstand der Erfindung ist daher ein Verfahren zur Herstellung eines lichtpolarisierenden Films auf der Basis von Polyvinylalkohol und wenigstens eines organischen, dichroitischen Chromophors durch Auftragen einer Lösung, die sowohl das wenigstens eine Chromophor als auch Polyvinylalkohol enthält, mittels eines dosierenden Gießers auf eine an der Auftragsstelle vorbeigeführte Trägerfolie, Entfernen des Lösungsmittels, Abziehen der Polyvinylalkoholfolie und Recken der Polyvinylalkoholfolie.

Vorzugsweise werden wenigstens zwei wäßrige Polyvinylalkohollösungen aufgetragen, wobei die untere PVAL-Lösung eine Viskositat von 10 bis 50 mPas, vorzugsweise von 20 bis 35 mPas, und eine Naßschichtdicke von 10 bis 50 µm aufweist (Beschleunigungsschicht) und die zweite PVAL-Lösung wenigstens einen dichroitischen Chromophor in ausreichender Konzentration enthält und eine Viskosität von wenigstens 60 mPas aufweist.

Vorzugsweise hat die zweite Schicht eine Naßschichtdicke von 100 bis 600 µm; ihre Viskosität kann bis zu 600 mPas betragen.

In einer bevorzugten Ausführungsform enthält auch die Gießlösung mit der geringen Viskosität einen dichroitischen Chromophor, insbesondere den gleichen wie in der nächstfolgenden Schicht und ganz besonders bevorzugt im gleichen Farbstoff-zu-PVAL-Verhältnis wie in der nächstfolgenden Schicht.

Die Schicht mit der höheren Viskosität kann ein oder mehrere dichroitische Chromophore enthalten. Es können aber auch mehrere höherviskose Schichten mit unterschiedlichen Chromophoren gegossen werdend Zwischen den einzelnen Schichten mit unterschiedlichen Chromophoren können, falls dies erforderlich ist, Zwischenschichten aus PVAL, die kein Chromophor enthalten, gegossen werden.

In einer bevorzugten Ausführungsform kann über die Schicht oder die Schichten mit der höheren Viskosität bzw. den höheren Viskositäten wiederum eine PVAL-Schicht mit einer Viskosität von 10 bis 60 mPas und einer Naßschichtdicke von 10 bis 50 µm (Spreitungsschicht) gegossen werden, wodurch es möglich wird, die Trägerbahn auch in umgekehrter Richtung an der Gießstelle vorbeizuführen. Für die obere gering viskose Gießlösung gelten die gleichen Kriterien wie für die untere gering viskose Gießlösung.

Werden mehrere Schichten gegossen, so haben diese Schichten vorzugsweise die gleiche Zusammensetzung sowohl quantitativ wie qualitativ. Bei unterschiedlicher Zusammensetzung der Schichten sollte eine sprunghafte Änderung der Zusammensetzung vermieden werden. Es ergibt sich ein Gradient der Zusammensetzungsänderung.

Die Geschwindigkeit der an der Gießstelle vorbeigeführten Trägerbahn ist üblicherweise größer als die Fließgeschwindigkeit der übereinanderliegenden Gießlösungen auf der Gleitfläche des Gießers. Vorzugsweise beträgt sie wenigstens das 10-fache der Fließgeschwindigkeit auf der Gleitfläche, insbesondere das 12 bis 20-fache. Im Verhältnis dieser beiden Geschwindigkeiten wird die Naßschichtdicke des Gießpaketes auf der Trägerbahn gegenüber der Naßschichtdicke des Gießpaketes auf der Gleitfläche des Gießers verringert.

Die Gießtemperatur der Lösung (Temperatur am Gießkopf) beträgt bevorzugt 35 bis 80°C, besonders bevorzugt 50 bis 60°C.

Alle Gießlösungen werden zweckmäßigerweise in einem Gießvorgang auf die Trägerbahn gegossen. Vermischungen der Gießlösungen untereinander lassen sich durch entsprechende Einstellung der Oberflächenspannung bzw. Viskosität der benachbarten Gießlösungen vermeiden.

Die unterschiedlichen Gießlösungen können aber auch in mehreren Gießvorgängen auf die Trägerbahn bzw. auf die bereits auf der Trägerbahn befindlichen Schichten aufgebracht werden.

Mit dem erfindungsgemäßen Verfahren, das ein gleichzeitiges Gießen von 7 oder mehr Schichten erlaubt, werden trotz der hohen Viskositäten der wesentlichen, die dichroitischen Chromophore in hoher Konzentration enthaltenden Gießlösungen, Gießgeschwindigkeiten (Geschwindigkeit der Trägerbahn) von 300 m/min und mehr erreicht.

Ein dosierender Gießer ist ein Gießer, bei dem von einer einmal aufgetragenen Menge an Gießflüssigkeit auf den Träger kein Feststoff mehr entfernt wird. Die Schichtdicke des Gießauftrags wird durch die Auftragsgeschwindigkeit der Gießflüssigkeit und die Trägergeschwindigkeit festgelegt. Geeignete dosierende Gießer sind z.B. Extrusionsgießer und insbesondere Gleitflächengießer.

Extrusionsgießer bringen die Beschichtungsflüssigkeit durch einen auf die Breite des Materials abgestimmten Schlitz direkt auf den Träger und sind insbesondere dann geeignet, wenn eine einzige Beschichtungsflüssigkeit aufgebracht werden soll.

Unter einem Gleitflächengießer wird ein Gießer verstanden, der eine geneigte Gießfläche aufweist, in der quer zur Neigung ein oder mehrere Austrittsschlitze vorgesehen sind, aus denen die Beschichtungsflüssigkeiten austreten, um über die geneigte Fläche (Gleitfläche) hinabzufließen.

Der Gleitflächengießer bietet die Möglichkeit, mehrere Beschichtungsflüssigkeiten gleichzeitig auf einen Träger aufzubringen, ohne daß sich zwischen den einzelnen Gießschichten Vermischung einstellt.

Am Ende der Gleitfläche kann die Beschichtungsflüssigkeit entweder als frei fallender Vorhang auf den zu beschichtenden Träger auftreffen (Vorhanggießer) oder in einem Meniskus nach oben umgelenkt und von dem vorbeigeführten Träger mitgenommen werden (Meniskusgießer).

Unter dem Meniskus wird üblicherweise zur Verbesserung der Gießqualität ein Vakuum angelegt, beispielsweise zwischen 6 und 40 mbar.

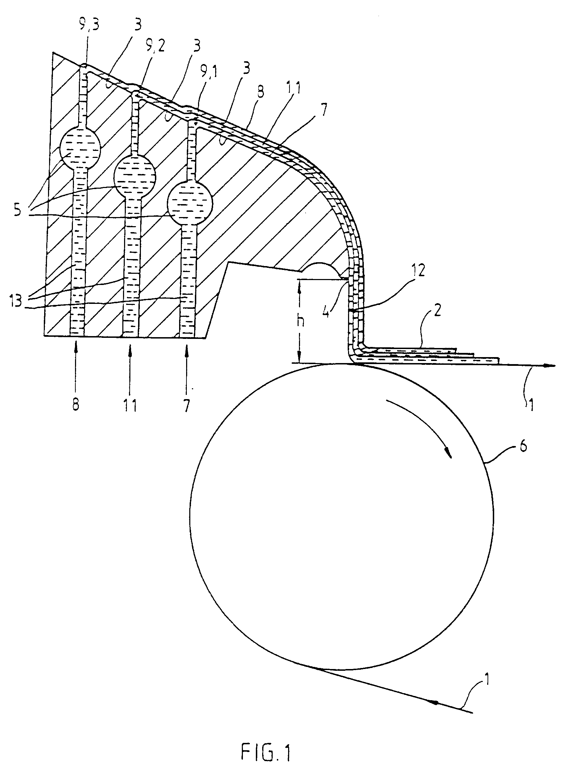

Ein geeigneter Vorhanggießer ist in Fig. 1 dargestellt.

Fig. 1 zeigt einen Schnitt durch einen Vorhanggießer 13 zur Durchführung des erfindungsgemäßen Verfahrens in vereinfachter schematischer Darstellung für nur eine hochviskose Schicht 11, die zwischen eine Beschleunigungsschicht 7 und eine Spreitungsschicht 8 eingebettet ist. Die Beschichtungsflüssigkeiten 7, 11 und 8 werden den Verteilerkammern 5 von außen über aufsteigende Kanäle 13 zugeführt (Pfeile), treten aus den Austrittsschlitzen 9.1 und 9.2 und 9.3 auf die geneigten Flächen 3 aus, fließen infolge der Schwerkraft und der durch Zugabe geeigneter Tenside entsprechend eingestellten Oberflächenspannung der Lösungen übereinander zu der schnabelförmigen Gießerkante 4 herab. An den Gießerkante 4 bildet sich ein über eine Höhe h frei fallender Vorhang 12, der sich auf eine über eine Gießwalze 6 herangeführte Bahn 1 legt. Die Beschleunigungsschicht 7 erleichtert hierbei in erheblichem Maße das Trennen des Schichtpaketes 2 von der Gießerkante 4 und bewirkt ein gutes Benetzen der Bahn 1, so daß mit höheren Geschwindigkeiten beschichtet werden kann und die Qualität der Beschichtung verbessert wird. Die Spreitungsschicht 8 schirmt die hochviskose Schicht 11 gegen die Außeneinflüsse ab und stabilisiert und glättet in erheblichem Maße den frei fallenden Flüssigkeitsvorhang 12.

In einer anderen Ausführungsform des Gießers (nicht gezeigt) kann eine weitere, vorzugsweise niedrigviskose Beschichtungslösung von der Unterseite des Gießers an die Gießerkante 4 herangeführt werden, was das saubere Abreißen des Schichtpaketes 8 von der Gießerkante 4 erleichtert.

Der Vorhang 12 beschichtet die Bahn 1 über ihre gesamte Breite, wobei der Überschuß an Begußmaterial an den Rändern durch Auffangwannen aufgefangen und abgeleitet werden kann. Es entstehen so Bahnen ohne Randabschnitt, die über die gesamte Breite mit den Beschichtungslösungen beschichtet sind und keinen Randwulst aufweisen.

Vorteilhafterweise wird die Bahn 1 aber nur bis fast an die Bahnränder beschichtet, wobei der Vorhang 12, wie bekannt, durch fast an die bewegte Bahn heranreichende Vorhangführungselemente geführt und somit an einer Zusammenziehung durch die Oberflächenspannung gehindert wird. Auf diese Weise geht weniger wertvolles Beschichtungsmaterial verloren. Die Bahn 1 mit dem Gießpaket 2 ist dann nicht über die volle Breite begossen.

Der erhebliche und überraschende Vorteil des Verfahrens nach der Erfindung liegt für den Vorhangbeguß in der unerwarteten Steigerung der Begießgeschwindigkeiten für hochviskose Gießlösungen 11. Für den Vorhanggießer ist besonders bemerkenswert, daß bereits eine Vorhanghöhe von z.B. h = 15 mm für eine hochwertige Beschichtung ausreichend ist. Bei der geringen Vorhanghöhe h ist eine besondere Abschirmung des Vorhangs gegen Flattern durch Luftbewegung häufig nicht mehr erforderlich, wodurch Kosten gespart werden und die Zugänglichkeit zum Vorhang verbessert wird. Außerdem wird durch das erfindungsgemäße Verfahren die Stabilität des Vorhangs erhöht, indem durch den Einsatz der Beschleunigungsschicht 8 an der Ablaufkante 4 des Vorhanggießers keine Instabilitäten auftreten und die Schichten 11 des Vorhanges aus hochviskosen Lösungen aufgebaut werden können. Durch die geringe Fallhöhe sind die Einschnürungen des Vorhangs durch die üblicherweise schräg nach innen geneigten Vorhanghalter sowie die Randverdickungen des Vorhanges 12 geringer, wodurch die Verluste im Randbereich der Bahn 1 beim Beschichten erheblich reduziert werden.

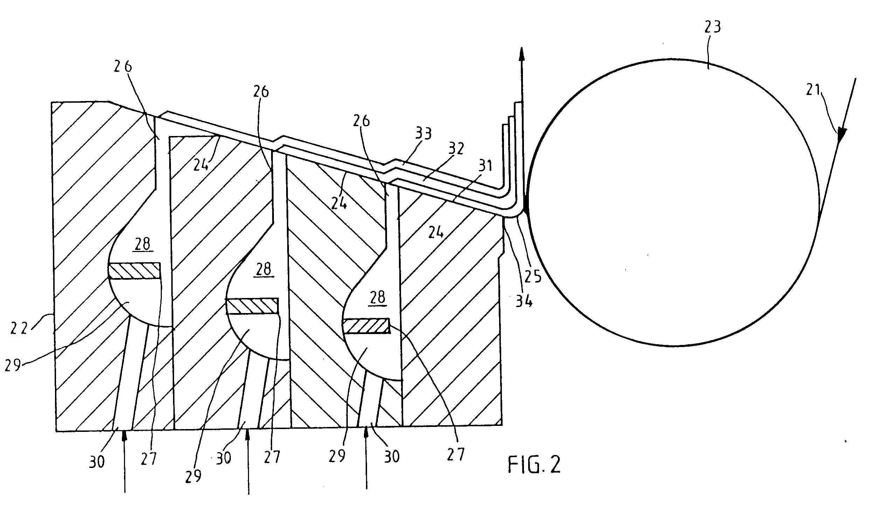

Ein geeigneter Meniskusgießer ist in Fig. 2 dargestellt.

Fig. 2 zeigt einen Schnitt durch einen Meniskusgießer zur Durchführung des erfindungsgemäßen Verfahrens in vereinfachter schematischer Darstellung für eine hochviskose Schicht 32, die zwischen niederviskosen Schichten 31 und 33 eingebettet ist. Gemäß Fig. 2 wird die zu beschichtende Bahn 21 über die Gießwalze 23 geführt. Die Beschichtung erfolgt am unteren Ende der Fließebene 24, wo sich der Beschichtungsmeniskus 25 ausbildet. Die Beschichtungsflüssigkeiten 31, 32 und 33 gelangen über die Zuführungsspalte (Austrittsschlitze) 26 auf die Fließebene 24. Im Inneren des Gießerblocks 22 befindet sich die durch einen engen Verbindungsspalt 27 voneinander getrennten Druckverteilungskammern 28 und 29. Die Druckverteilungskammern 28 und 29 sowie die Spalte 26 und 27 erstrecken sich über die gesamte Bahnbreite. An die Druckverteilungskammer 29 sind die Zuleitungsrohre 30 für die Beschichtungsflüssigkeiten (Gießlösungen) angeschlossen. Die Druckverteilungskammer 29 wird daher definitionsgemäß als erste Druckverteilungskammer bezeichnet.

Die Gießlösungen werden in zeitlich dosierter Menge von außen zugeführt (Pfeile), treten aus den Austrittsschlitzen 26 auf die geneigen Fließebenen 24 aus, fließen infolge der Schwerkraft und der durch Zugabe geeigneter Tenside entsprechend eingestellten Oberflächenspannungen der Lösungen übereinander zu der Gießerkante 34 herab. Zwischen Gießerkante 34 und Gießwalze 23 bildet sich ein Beschichtungsmeniskus, der durch das Anlegen eines bestimmten Sperrvakuums so tief einzieht, daß ein optimaler Beguß über die gesamte Bahnbreite gewährleistet ist. Die Schicht 31 erleichtert hierbei in erheblichen Maße das Trennen des Schichtpakets 31, 32, 33 von der Gießerkante 34 und bewirkt ein gutes Benetzen der Bahn 21, so daß mit höheren Geschwindigkeiten gegossen werden kann und die Gießqualität verbessert wird. Die Schicht 33 schirmt die hochviskose Schicht 32 gegen die Außeneinflüsse ab und stabilisiert und glättet in erheblichem Maße das gesamte Flüssigkeitspaket.

Anstelle der genannten Gießvorrichtungen lassen sich auch andere geeignete Gießvorrichtungen einsetzen, die beispielsweise eine höhere Zahl von Gießschlitzen (fünf oder sieben) aufweisen.

Geeignete Träger zur Herstellung der erfindungsgemäßen Filme sind beispielsweise Folien von halb synthetischen oder synthetischen Polymeren z.B. Cellulosenitrat, Celluloseacetat, Cellulosebutyrat, Polystyrol, Polyvinylchlorid, Polyethylenterephthalat und Polycarbonat, sowie mit einer Barytschicht oder α-Olefinpolymerschicht (z.B. Polyethylen, Polypropylen und ein Ethylen-Butadien-Copolymer) laminiertes (kaschiertes) Papier.

Als Gießlösungen zur Herstellung der erfindungsgemäßen Folien kommen chromophorhaltige, wäßrige Lösungen von Polyvinylalkohol in Frage, die noch Additive enthalten können. Besonders bevorzugt sind Lösungen mit einem Feststoffgehalt von 4 bis 12 Gew.-% und einem darauf bezogenen Chromophorgehalt zwischen 0,1 und 7 Gew.-%, wobei bei fluoreszenzfähigen Chromophoren ein Gehalt von 0,1 bis 2 Gew.-%, bei anderen bunten Chromophoren einer von 4 bis 7 Gew.-% bevorzugt ist.

Als Polyvinylalkohol kommt jeder Polyvinylalkohol in Frage, der durch vollständige oder teilweise Verseifung von Polyvinylacetat hergestellt worden war, insbesondere ein Polyvinylalkohol (PVAL), bei dem 90 bis 100 Mol-%, bevorzugt 95 - 100 Mol-% aller (Co)Monomeren des Polymer Vinylalkoholeinheiten sind. Der Rest zu 100 Mol-% aller Monomereinheiten besteht aus Monomereinheiten, wie Ethylen, Vinylacetat, Vinyltrifluoracetat und anderen für solche Copolymeren bekannten Comonomereinheiten. Geeignete Polyvinylalkoholtypen haben Viskositäten nach DIN 53015 von 10 bis 40 mPa.s, insbesondere von 15 bis 32 mPa.s.

Diese Copolymeren können als vorwiegend taktische oder ataktische Polymere vorliegen. Der erfindungsgemäß einzusetzende PVAL kann beispielsweise durch Copolymerisation von 90 bis 100 Mol-% Vinylacetateinheiten mit weniger als 10 Mol-% Ethyleneinheiten und vollständige Verseifung aller Vinylacetateinheiten hergestellt werden. Er kann aber auch durch Polymerisation von Vinylacetat oder Vinyltrifluoracetat und Verseifung von 90 bis 100 Mol-% aller Estergruppen hergestellt werden. In der industriellen Praxis wird PVAL durch Verseifung von Polyvinylacetat zum gewünschten Grad hergestellt.

Gegebenenfalls können die Gießlösungen noch Zusatzstoffe enthalten, die die filmbildenden Eigenschaften beeinflussen und die allein oder in Mischungen eingesetzt werden können. Bevorzugt sind oberflächenaktive Verbindungen, besonders anionische oder amphotere Tenside, um die Benetzungseigenschaften der Lösungen zu verbessern.

Der Anteil der Zusatzstoffe, besonders Tenside beträgt von 0,001 bis 1 Gew.-%, vorzugsweise 0,005 bis 0,1 Gew.-%, bezogen auf 100 Gew.-% Gießlösung.

Geeignete oberflächenaktive Verbindungen sind beispielsweise Sulfonsäuren, wie Alkansulfonsäuren, insbesondere Sulfobernsteinsäure-octylester, Perfluoralkansulfonsäuren, insbesondere Perfluoroctansulfonsäure, und ihre Tetraalkylammoniumsalze, beispielsweise das Tetraethylammoniumsalz, Sulfate, insbesondere sulfatierte Alkylphenolpolyglykolether oder Alkylsulfonate, amphotere Tenside, insbesondere Alkanamidopropylbetaine, beispielsweise Lauramidopropylbetain oder die in CA mit den folgenden REG-Nrn. aufgeführten Verbindungen: 73772-45-9, 96565-37-6, 4292-10-8, 59272-84-3, 25729-05-9, 6179-44-8, 21244-99,5, 58793-79-6, 329564-43-1, 92836-76-5 oder nichtionische Tenside wie 4-Octylphenolpolyglykolether.

Als weitere Zusatzstoffe kommen aliphatische Polyole mit 2 bis 6 C-Atomen, aliphatische Etherpolyole mit 2 bis 6 C-Atomen, C₁-C₄-Alkylether von aliphatischen Polyolen mit 2 bis 6 C-Atomen, aliphatische Aminoalkohole mit 1 bis 4 C-Atomen in Mengen von 0,5 bis 10 Gew.-%, bezogen auf die gesamte Gießlösung, in Betracht.

Als aliphatische Polyole (Diole, Triole) mit 2 bis 6 C-Atomen sei beispielhaft Ethylenglykol genannt.

Als aliphatische Etherpolyole mit 2 bis 6 C-Atomen seien beispielhaft Diethylenglykol, Triethylenglykol genannt. Als C₁-C₄-Alkylether der genannten Polyole seien beispielhaft Ethylenglykolmono- und -dimethylether, Ethylenglykolmono- und -diethylether genannt.

Als aliphatische C₁-C₄-Aminoalkohole seien beispielhaft Propanolamin, Ethanolamin genannt.

Die Wahl der Chromophore ist, sofern diese in der Gießlösung löslich sind, nicht begrenzt. Ein Vorteil des Verfahrens ist es, die Lösungen der Bestandteile einzeln optimieren zu können.

Bevorzugte Chromophore sind beispielsweise in DE-A-39 21 669, DE-A-38 43 414, DE-A-3 615 765 beschrieben.

Die Anzahl der Schichten ist bevorzugt 2 bis 9.

Die lichtpolarisierenden Filme oder Folien können in an sich bekannter Weise mit anderen doppelbrechungsfreien Materialien compoundiert oder laminiert werden. Als Schutzüberzug eignen sich z.B. Folien aus einem Tetrafluorethylen-hexafluorethylen-Copolymer, Polyarylethersulfonen oder einem anderen Fluorkohlenwasserstoff-Harz, einem Polyester-, Polyolefin- oder Polyamid-Harz, einem Polycarbonat oder Celluloseester, vorzugsweise -(tri)-acetat, -propionat oder -butyrat oder einem modifizierten Poly(meth)acrylat.

Die Schichten lassen sich nach dem Trocknen leicht von der Unterlage lösen und recken. Das Recken erfolgt bei Temperaturen von 60 bis 180°C, vorzugweise von 100 bis 150°C um einen Betrag von 300 bis 800 %, vorzugsweise 400 bis 700 %. Nach Verkleben mit einer optisch isotropen und im sichtbaren Spektralgebiet leeren Folie erhält man Polarisationsfolien mit einem sehr guten dichroitischen Verhältnis und einer frei wählbaren Nuance.

Gewünschtenfalls können die farbstoffhaltigen Filme auch einer Nachbehandlung, z.B. mit wäßriger Borsäurelösung, zwecks Verbesserung der Feuchtebeständigkeit oder der Lichtdurchlässigkeit unterworfen werden. Die Bedingungen, unter denen diese Nachbehandlung durchgeführt wird, können unabhängig vom Filmmaterial und Farbstoff schwanken. Vorzugsweise arbeitet man mit einer 1-15 gew.-%igen, besonders bevorzugt 5-10 gew.-%igen Borsäurelösung bei 30-80°C, besonders bevorzugt bei 50-80°C. Vorzugsweise setzt man der Borsäurelösung Tenside und gegebenenfalls anorganische Salze zu. Die Tenside können nicht-ionisch, kationisch oder anionisch sein, bevorzugt sind sie nicht-ionisch.

Beispiele für nicht-ionische Tenside sind: Additionsprodukte von Ethylenoxid an höhere Alkohole oder Phenole, beispielsweise Nonylphenol. Vorzugsweise verwendet man, bezogen auf Wasser, 0,005-0,5 Gew.-%, besonders bevorzugt 0,02-0,2 Gew.-% Tensid. Als anorganische Salze kommen vorzugsweise Na-sulfat, und weiterhin K-sulfat, Na-chlorid, KCl, Na-nitrat, K-nitrat in Betracht. Bezogen auf Wasser werden vorzugsweise 0,1-5 Gew.-%, besonders bevorzugt 0,3-3 Gew.-% anorganische Salze eingesetzt. Gewünschtenfalls kann noch eine Fixierungsbehandlung mit einer wäßrigen Lösung einer hochmolekularen kationischen Verbindung vorgenommen werden.

Die erfindungsgemäß hergestellten polarisierenden Filme werden zur Herstellung von Polarisationsfolien verwendet. Diese finden als Polarisationsfilter und optische Anzeigen Verwendung.

An Hand von Beispielen sollen einige Möglichkeiten von Beschichtungen dargestellt werden. Die Beispiele sind nur eine Auswahl und können daher nur einen Überblick geben, der keinen Anspruch auf Vollständigkeit erhebt. Die in den nachfolgenden Beispielen gezeigten Tabellen verwenden Symbole mit folgender Bedeutung:
η = Viskosität (mPas)
σ = Oberflächenspannung (mN/m)
δ = Naßauftrag auf der Bahn (µm)
ν = Bahngeschwindigkeit (m/min)
h = Vorhanghöhe (mm)

### Beispiel 1

Eine Beschichtungseinrichtung nach Fig. 1 wurde als Gießer für einen zweischichtigen Beguß verwendet. Die Begußdaten der einzelnen Schichten waren:

### Lösung A:

Eine 8 gew.-%ige PVAL-Lösung enthält 4 Gew.-% (bezogen auf PVAL) einer Mischung zu gleichen Teilen aus 4,4'-Azo-(4-sulfo-azobenzol)-stilben-2-sulfonsäure und 4-Nitro-4'-(2-sulfo-4-oxi-6-N-benzoylamino-naphthalin-)-stilben-3-sulfonsäure und ein anionisches Tensid. Ersteren Farbstoff erhält man durch alkalische Kondensation der 4,4'-Dinitro-stilben-2-sulfonsäure mit Azobenzol-4-sulfonsäure unter literaturbekannten Bedingungen (Houben-Weyl Bd. 1013, Seite 229 ff. (1965), Thieme Verlag, Stuttgart), letzteren durch Kupplung des Diazoniumsalzes der 4-Amino-4'-nitrostilben-2-sulfonsäure auf N-Benzoyl-1-Säure nach literaturbekanntem Verfahren. Als PVAL wird ein verseiftes Polyvinylacetat, Hydrolysegrad 99,4 ± 0,4 Mol-%, Viskosität nach DIN 53015 von 28 ± 2 mPa.s, Esterzahl 8 ± 5 mg KOH/g eingesetzt.

Lösung B entsteht durch Verdünnung der Lösung A um 40 % mit Wasser.

**Tabelle 1**

| | Viskosität η [mPas] | Oberflächenspannung σ [mN/m] | Schichtdicke Naßauftrag δ [µm] |
|---|---|---|---|
| Lösung A | 400 | 32 | 200 |
| Lösung B | 50 | 25 | 30 |

Die zwei Schichten werden in einem Durchgang bei einer Temperatur von 60°C mit einer Bahngeschwindigkeit von 50 m/min. mit einem Vorhanggießer bei einer Vorhanghöhe von 15 mm auf eine mit Gelatine substrierte Filmbahn gegossen.

Nach dem Trocknen erhält man eine leicht stripbare Folie mit ausgezeichneter Oberflächenqualität und gleichmäßiger Farbdichte mit einer konstanten Dicke von 27 µm.

### Beispiel 2

Gemäß Beispiel 1 werden die Lösungen A und B hergestellt. In gleicher Weise wird eine farbstoffreie Lösung C bereitet und eine Lösung D, die an Stelle des in der Lösung A enthaltenden Farbstoffs die gleiche Menge N,N'-Bis-[3-(10-amino-4,11-disulfo-6,13-dichlor-triphendioxazinyl)]-harnstoff enthält. Die Viskositäten und Oberflächenspannungen werden gemäß Tab. 2 durch Zugabe von anionischen Tensiden eingestellt:

**Tabelle 2**

| | Viskosität η [mPas] | Oberflächenspannung σ [mN/m] | Schichtdicke Naßauftrag δ [µm) |
|---|---|---|---|
| Lösung A | 400 | 32 | 100 |
| Lösung B | 50 | 25 | 30 |
| Lösung C | 400 | 33 | 30 |
| Lösung D | 400 | 34 | 100 |

Die Oberflächenspannung wird mit einem Stalagmometer, die Viskosität mit einem Kugelfall-Viskosimeter bei 50°C bestimmt. Mit der Schichtenfolge BACDC wird eine Folie unter den in Beispiel 1 beschriebenen Bedingungen gegossen.

Nach dem Trocknen erhält man eine leicht und ohne Verformung von der Unterlage abziehbare tiefdunkelbraune Folie mit sehr guter Oberflächengüte und einer konstanten Schichtdicke von 25 µm. Die Folie zeigt im Schnitt einen ungestörten schichtweisen Aufbau und wird um 600 % gereckt.

Zwei Folien dieser Art zeigen übereinander gelegt und mit einer Lichtquelle durchleuchtet bei verschiedenen Wellenlängen folgende optische Daten:

| Wellenlänge | Epara | Esenk | QE |
|---|---|---|---|
| 630 nm | 3.14 | 0.090 | 34.9 |
| 610 nm | 4.60 | 0.112 | 41.2 |
| 560 nm | 5.09 | 0.144 | 35.3 |
| 500 nm | 4.59 | 0.176 | 26.1 |
| 420 nm | 5.50 | 0.241 | 22.8 |

Epara bedeutet die Absorption mit gekreuzten optischen Achsen, Esenk die bei parallelen und QE das dichroitische Verhältnis.

Die Folie nach Beispiel 2 ist somit hervorragend als Polarisationsfolie geeignet.

## Patentansprüche

1. Verfahren zur Herstellung eines lichtpolarisierenden Films auf der Basis von Polyvinylalkohol und wenigstens eines organischen, dichroitischen Chromophors durch Auftragen einer Lösung, die sowohl das wenigstens eine Chromophor als auch Polyvinylalkohol enthält, mittels eines dosierenden Gießers auf eine an der Auftragsstelle vorbeigeführte Trägerfolie, Entfernen des Lösungsmittels, Abziehen der Polyvinylalkoholfolie und Recken der Polyvinylalkoholfolie.

2. Verfahren nach Anspruch 1, dadurch gekennzeichnet, daß wenigstens zwei waßrige Polyvinylalkohollösungen aufgetragen werden, wobei die untere PVAL-Lösung eine Viskosität von 10 bis 50 mPas und eine Naßschichtdicke von 10 bis 50 µm aufweist (Beschleunigungsschicht) und die zweite PVAL-Lösung wenigstens einen dichroitischen Chromophor in ausreichender Konzentration enthält, eine Naßschichtdicke von 100 bis 600 µm und eine Viskosität von wenigstens 60 mPas, insbesondere von 60 bis 600 mPas, aufweist.

3. Verfahren nach Anspruch 1, dadurch gekennzeichnet, daß die Beschleunigungsschicht den gleichen dichroitischen Chromophor enthält wie die nächstfolgende Schicht.

4. Verfahren nach Anspruch 3, dadurch gekennzeichnet, daß die Beschleunigungsschicht den dichroitischen Chromophor im gleichen Farbstoff-zu-PVAL-Verhältnis enthält wie die nächstfolgende Schicht.

5. Verfahren nach Anspruch 1, dadurch gekennzeichnet, daß über die Schicht oder Schichten mit höherer Viskosität wiederum eine PVAL-Schicht mit einer Viskosität von 10 bis 60 mPas und einer Naßschichtdicke von 10 bis 50 µm (Spreitungsschicht) gegossen wird.

6. Verfahren nach Anspruch 5, dadurch gekennzeichnet, daß die Spreitungsschicht den gleichen dichroitischen Chromophor enthält wie die unmittelbar vorhergehende Schicht.

7. Verfahren nach Anspruch 6, dadurch gekennzeichnet, daß die Spreitungsschicht den dichroitischen Chromophor im gleichen Farbstoff-zu-PVAL-Verhältnis enthält wie die unmittelbar vorhergehende Schicht.

8. Verfahren nach Anspruch 1, dadurch gekennzeichnet, daß die Geschwindigkeit der Trägerbahn wenigstens das 10-fache der Fließgeschwindigkeit auf der Gleitfläche des Gießers beträgt.

9. Verfahren nach Anspruch 1, dadurch gekennzeichnet, daß der gegossene, getrocknete und von der Trägerbahn abgezogene Filme bei 60 bis 180°C um einen Betrag von 300 bis 1.000 % verstreckt wird.

10. Verfahren nach Anspruch 1, dadurch gekennzeichnet, daß man als Gießvorrichtung einen Vorhanggießer oder einen Meniskusgießer verwendet.
